# EUROPEAN PATENT SPECIFICATION

(11) **EP 1 342 418 B1**
(45) Date of publication and mention of the grant of the patent: **22.08.2012**
(21) Application number: 02004897.1
(22) Date of filing: 04.03.2002
(51) Int. Cl.: A23G 9/38

(54) **Ice-cream product**
Eiscreme
Glace

(43) Date of publication of application: 10.09.2003
(73) Proprietor: Nestec S.A., 1800 Vevey (CH)
(72) Inventor: Graf, Andreas Werner, 1163 Etoy (CH); Bürgisser, Patrick, 5503 Schafisheim (CH); Müller, Stève, 1400 Yverdon-les-Bains (CH); Henck, Martin Andreas, 4800 Zofingen (CH)
(74) Representative: Sutter, Kurt

(56) References cited:
- DE-A- 3 043 647
- US-A- 5 232 731

## Description

The invention concerns a method for preparing an ice-cream product according to claim 1. Furthermore, the invention concerns an ice-cream product according to claim 10 and an ice-cream product according to claim 13 which is prepared by the method according to claim 1.

So far, it has been impossible to prepare an ice-cream product - with about a pH ≤ 6.0 and comprising proteins - without totally or at least significantly changing the properties of said proteins during said preparation. The property changes of said proteins in particular comprise a negative impact on the organoleptic characteristics of the ice-cream product. US5232731 discloses protein dispersions suitable for food products and specifically discloses an ice-cream product, having a pH above 5 and comprising a substantially aggregated casein containing dispersion. DE 3043647 discloses a egg containing interim product with improved stability, said product having a pH of 4 - 6 and being potentially suitable for ice-cream manufacturing.

Therefore, it is an object of the invention to provide a method for preparing a frozen ice-cream product that at least partially or totally, respectively, avoids the before mentioned disadvantages of the prior art.

Further objects of the invention are to provide an ice-cream product with low pH and in particular to provide an ice-cream product with low pH and prepared by the method according to the present invention.

Now, in order to implement these and still further objects of the invention, which will become more readily apparent as the description proceeds, the invention is manifested by the features that are mentioned in the independent claims. Specific embodiments are the subject of dependent claims.

As a first object, the invention provides a method for preparing a frozen ice-cream product with a pH ≤ 6.0 and comprising at least one protein, wherein at least one cream-mix with a pH > 6.0 and comprising said at least one protein is combined with at least one acid component comprising at least one acid to form an ice-cream mixture such that at a given temperature the contact time of said at least one protein and said at least one acid component prior to freezing said ice-cream mixture with simultaneous mixing, or prior to freezing said at least one cream-mix is at most such that said at least one protein does not react with said at least one acid, or does not organoleptically perceivably coagulate.

The terms "cream-mix", "ice-cream mixture", "ice-cream product" comprise milk fat and/or vegetable fat comprising compositions.

The method according to the invention provides the advantage that - based on at least one cream-mix with a pH of > 6.0 and comprising at least one protein, and at least one acid-component comprising acid - an ice-cream product with a pH ≤ 6.0 and comprising said at least one protein can be prepared such that said at least one protein does not react with said acid and/or does not coagulate to a particle size of > 100 µm, preferably > 70µm.

The desired result is achieved in that the acid, or the at least one acid component comprising said acid, respectively - which is necessary to obtain an ice-cream product with a pH ≤ 6.0 - and the at least one protein or the at least one cream-mix comprising said protein, respectively, are combined to an ice-cream mixture shortly before the freezing step with simultaneous mixing of the inventive method takes place, or, in other words, their contact time prior to freezing is inventively limited. By limiting the contact time prior to freezing - that at least for the ice-cream mixture is performed with simultaneous mixing - the formation of undesiredly coarse coagulates can be avoided. Preferably, said contact time is so short that at least part of the proteins do not at all react with the acid or coagulate.

Usually, the contact time before freezing (entering the freezer) is < 5 seconds (s), preferably < 3s, most preferably 0s.

The temperature (given temperature) of said ice-cream mixture prior to freezing usually corresponds to the temperatures of the mixes known in the state of the art before entering the freezer. Normally said temperatures are -2 to 10°C.

In general, all temperature/contact time-combinations are felt to fall within the scope of the present invention which allow that said at least one protein does not coagulate to so large particles that an ice-cream product would result that is no longer accepted by the consumer.

The organoleptically acceptable particle size of such coagulates should be < 100 µm, preferably < 70 µm, more preferably < 50 µm, much preferably < 30 µm and most preferably < 10 µm.

In a second aspect of the inventive method the at least one cream-mix comprising the at least one protein is frozen before combining it with the at least one acid component to an ice-cream mixture.

In this second approach, the at least one protein is already in a partially frozen environment and therefore is not able any more (or only to a small extent) to react with the acid. In this variant of the inventive method the contact time between the at least one protein and the acid prior to freezing is 0 seconds.

In connection with the present invention the term "at least one protein" means proteins that are unstable at a pH ≤ 6.

An example of such a protein is in particular casein. Today, often milk or milk products (e.g. milk powder) comprising said proteins are used as ingredients for the preparation of ice-cream products. If said proteins get into contact with acid during the preparation of the ice-cream product, i.e. if the pH of the environment of e.g. said casein is less than 5.0, at a temperature of 5 °C said casein precipitates within 1 minute which - unless provisions as taught by the present invention are made - has a negative impact on the sensory properties of the resulting ice-cream product.

By applying the inventive method, a further benefit is that the provisions made for proteins allow to use stabilisers that have hitherto only usable in regular pH ice-creams. So far, for the preparation of ice-cream products with a pH ≤ 6.0, acid-stable stabilisers that have to be declared as food additives had to be used. Since additives are not well accepted by the average consumer, in general, food manufactures try to eliminate ingredients that have to be respectively declared. The method according to the present invention now allows the wide application of non-acid-stable stabilisers such as native starch which is no additive according to, for example, Swiss food regulations.

As already mentioned several times above, frozen ice-cream products with a pH ≤ 6.0 can be prepared by the inventive method, but preferably, a frozen ice-cream product which has a pH ≤ 5.0, much preferably a pH of 5.0 to 2.5, more preferably a pH of 5.0 to 3.5 is prepared by the inventive method.

In comparison to ice-cream products known in the state of the art, the additional acid comprised by the inventive ice-cream product improves the fruity-like flavour perception by the average consumer. Concerning the ice-cream product according to the invention, it can be said that the increased acidity normally improves the fruity-like flavour of the ice-cream. Furthermore, an increasing acidic environment generally contributes to a greater microbial stability.

The at least one cream-mix and the at least one acid component needed as starting materials for the preparation of an ice-cream product according to the inventive method are separately prepared and separately stored before their further use. Usually, one cream-mix and one acid component are sufficient.

For the purpose of the invention, said at least one cream-mix and said at least one acid component can comprise - in the limits defined below - all ingredients which can be used for the preparation of an ice-cream product.

The composition of the at least one cream-mix with a pH above 6.0 and the at least one acid component with a pH of below 6.0 is restricted in so far that the at least one cream-mix preferably comprises all proteins as defined-above and the further acid-sensitive ingredients such as stabilizers etc., whereas the at least one acid component should not and preferably does not comprise any of said at least one protein, although amounts of up to about 2 % do not unacceptably affect the organoleptic properties.

The at least one cream-mix normally comprises standard ice-cream-mix ingredients (e.g. cream, milk, milk fat, water, milk solids, proteins, vegetable fat, sugar and other sweeteners, stabilizers, emulsifiers, fruits, nuts, egg yolk, flavours, colours) that are stable at a pH > 6, and possibly unstable at a pH ≤ 6.

The at least one acid component usually comprises standard ice-cream-mix or sorbet-mix ingredients (e.g. water, butter, milk fat, vegetable fat, sugars and other sweeteners, fruits, acids, stabilizers, emulsifiers, flavours, colours) which are stable at a pH < 6.0. A standard sorbet-mix comprises for example water, fruits, colorants, flavours, sugars and other sweeteners, acids and stabilizers.

Depending on the method step of the inventive method and depending on the type of acid component, the at least one acid component is added to the at least one cream-mix in a frozen or non-frozen condition. For a person skilled in the art, it is clear in which case which variant has to be chosen.

To perform the inventive method, preferably, the at least one cream-mix (frozen or non-frozen) is combined with e.g. a sorbet-mix (frozen or non-frozen) in a ratio of 95:5 - 10:90, preferably a ratio of 70:30 - 30:70, more preferably a ratio of 50:50, based on weight. If e.g. an acid solution or a ripple are used, the amount of acid solution, ripple etc. can be below the above mentioned ranges due to higher concentration of ingredients.

It is clear that not all ingredients of the ice-cream product have to be contained in said at least one cream-mix and said at least one acid component. Further components as fruit pieces or nuts can also be added as such at a suitable time during the performance of the method according to the invention, whereby larger pieces of ingredients usually are added towards the end of the method.

In a first preferred embodiment, the inventive method comprises the steps of:
- Preparing said at least one cream-mix and preparing said at least one acid component;
- Freezing said at least one cream-mix to a frozen cream-mix;
- Combining said at least one frozen cream-mix with said at least one acid component to form the ice-cream mixture.

The term "frozen cream-mix" means that at least a part of the water comprised in said cream-mix is frozen. Said part usually is at least about 10 % of the whole water comprised in said cream-mix.

The at least one cream-mix is frozen before being combined with said at least one acid component and therefore, the contact between the acid comprised in said at least one acid component and the at least one protein comprised in said at least one cream-mix is omitted, or in other words, the contact time of the at least one protein and the acid prior to the cream-mix being frozen is 0 seconds (provided that the acid component is added at a temperature close to 0°C - 5 °C), such that the at least one protein is not affected. An at least one acid component which is added in an non-frozen condition to said frozen at least one cream-mix is for example a non-frozen concentrated aqueous solution of citric acid or a non-frozen ripple.

Preferably, said at least one acid component is frozen before combining it with said at least one frozen cream-mix to generate the ice-cream mixture. A much preferred acid component for combination in frozen state is a sorbet-mix since a frozen sorbet-mix is soft, i.e., can easily be mixed without leaving large "unmixed" parts, and since in a much preferred embodiment close to 1:1 amounts of cream-mix and sorbet-mix can be used. By additionally freezing the acid component, the risk of contact or reaction, respectively, between the at least one acid and the at least one protein is further reduced.

After freezing said at least one cream-mix, more preferably during combining said at least one frozen cream-mix with said at least one frozen or non-frozen acid component to the ice-cream mixture, chunky pieces such as fruit pieces, chocolate pieces, nuts and so forth can be added. Preferably, said chunky pieces are added in a fruit feeder comprising the ice-cream mixture.

In case that the at least one acid component is frozen before being combined with said at least one frozen cream-mix, the desired ratio of the at least one frozen cream-mix and the at least one frozen acid component in the subsequent mixing step can be determined by setting the freezers. Provided that the at least one cream-mix and at least one acid component are frozen in different freezers, the resistance of the cream-mix and the acid component in the freezers, the pressure in both freezers as well as the overrun of the cream-mix and the acid component is set to get the desired product. How to set or to evaluate such parameters is in the average knowledge of the skilled person.

The term "overrun" used in the previous paragraph designates the amount of air that is incorporated into the cream-mix or acid component, respectively, during freezing. An overrun of 100 % means for example that the volume of the cream-mix is doubled by the introduction of air. Usually an overrun of 20-140%, preferably an overrun of 80-100% is used for the performance of the present invention.

In a second embodiment, the inventive method comprises the steps of:
- Preparing said at least one cream-mix and preparing said at least one acid component;
- Combining said at least one cream-mix and said at least one acid component to form the ice-cream mixture;
- Freezing said ice-cream mixture with simultaneous mixing.

In this embodiment, said at least one cream-mix and said at least one acid component are combined such that said protein(s) only have a limited contact time with said acid(s) before the freezing step and therefore, the acid(s) only is (are) able to minimally change the perceivable properties of said protein(s).

As already mentioned above, said contact time usually is < 5s, preferably < 3s and most preferably 0s.

In case that said combining takes place in the time range (contact time) > 0s to < 5s, the at least one cream-mix and the at least one acid component are combined for example by a T-shaped piece with a first and a second arm which converge into a single flow path that enters said freezer. Said first arm directs e.g. the at least one cream-mix and the second arm directs e.g. the at least one acid component to the single flow path in which they merge and partly are premixed to form the ice-cream mixture before entering the freezer. The average contact time over the whole ice-cream mixture can be reduced if the cream-mix and the acid component are added to the single flow path sequentially at intervals of 0.2 to 30 seconds, preferably 1 to 30 s, more preferably 2 to 20 s.

In case that the contact time is almost 0s or 0s, the at least one cream-mix and the at least one acid component are e.g. combined just at their inflow into the freezer. Another possibility would be that the freezer comprises two separate first and second openings, wherein for example through the first opening the at least one cream-mix and through the second opening the at least one acid component is introduced into the freezer and their combination to the ice-cream mixture takes place in the freezer.

In addition to the contact time of < 5s as described-above, further reaction of the at least one protein can occur during a time period of usually about < 3s just after the ice-cream mix has entered the freezer. After said about 3s, the ice-cream mixture is frozen to such an extent that any further reaction/coagulation is almost stopped. The time period mentioned-above is based on the assumption that the freezer is a continuously working ice-cream freezer, typically cylindrically shaped and with surface scraping blades, that is run such that during the freezing and mixing process a part of the water (at least about 10 %) is frozen and that the product leaving said freezer has a temperature of at most -2°C, usually -3 to -12 °C, preferably -3 to -8 °C, more preferably -4 to -8 °C.

After freezing the ice-cream mixture, the frozen ice-cream mixture preferably is further mixed e.g. in a fruit feeder such as a HOYER FF-4000. Such a mixing step allows on the one hand to improve the homogeneity of the ice-cream product and on the other hand to incorporate chunky pieces such as fruit pieces, chocolate pieces, nuts and so on.

Also in this embodiment the preferred acid component is a sorbet-mix.

During all process steps following the freezing step and the combining step the temperature should be kept at a temperature corresponding to the above described temperatures of the product leaving the freezer.

In general, the conditions which are used to perform the method according to the invention can highly vary and depend - amongst other things - on the ice-cream product to be prepared and the equipment used for its preparation.

A detailed description of the current ice-cream technology is disclosed for example in Ice cream / Robert T. Marshall, W. S. Arbuckle. Fifth ed. New York: Chapman & Hall; 1996. whose teachings are herein incorporated by reference.

As soon as the frozen ice-cream product has been prepared according to the inventive method, the product is cooled further down to storage temperature of usually -18 to -30 °C. Said cooling down can take from 15 minutes to two days, usually from 15 minutes to 20 hours. After this cooling down, the product is storage stable for up to >12 months.

Furthermore, it can be added, that the method according to the invention has the advantage that it can be performed on already existing or slightly modified production lines and no special equipment is necessary, i.e. standard equipment can be used for the performance of the inventive method.

For example, all types of freezers that are suitable for the ice-cream production can be used for the performance of the present invention, or any type of mixer or feeder can be used for the mixing step which takes place after the freezing of the at least one cream-mix or the at least one ice-cream-mixture wherein said mixer preferably is a fruit feeder.

Suitable equipment to perform the method according to the invention are e.g. a GRAM FREEZER FCF-18-SS and/or a GRAM FREEZER FCF-18-22. Concerning the mixer mentioned in the previous paragraph, in particular a fruit feeder is preferred which is able to introduce chunky pieces such as a HOYER FF-4000.

Of course, besides the preparation of ice-cream products with a pH ≤ 6.0, the inventive method can also be used for the preparation of an ice-cream product with a pH > 6.0.

Another object of the invention provides a frozen ice-cream product with a pH ≤ 6.0 and comprising at least one protein that has not reacted with said at least one acid or not organoleptically perceivably coagulated.

Said frozen ice-cream product has preferably a pH ≤ 5.0, much preferably a pH of 5 to 2.5, more preferably a pH of 5 to 3.5.

The ice-cream products of the present invention can be variously confectioned, e.g. as in a lollipop form, in an ice-cream cornet form or just filled into ice-cream containers. Optionally, the ice-cream product has a coating as for example chocolate or a water ice coating and so on.

If the ice-cream product is confectioned such that it is totally or partially coated with e.g. water ice, chocolate or a ripple, the pH of the ice-cream product is measured without said coating.

Furthermore, the ice-cream product according to the invention preferably comprises 4 to 20 % fat (weight/weight). Additionally, the inventive ice-cream product preferably comprises at least one acid-sensitive stabiliser - such as native starch - which has not to be declared as an additive.

It is yet another object of the invention to provide an ice-cream product obtainable by the method according to the invention.

Further embodiments, advantages and applications of the invention result from the dependent claims and the following examples:

### Example 1

For the preparation of the ice-cream product, a cream-mix and a fat-free sorbet-mix are prepared.

The cream-mix and the sorbet-mix are separately pasteurised (e.g. at 65-68 °C during 30 min or at 72 °C during at least 15s or at > 100 °C during few seconds) in a flow heater. Subsequently, the pasteurised cream-mix is homogenised a first time (e.g. between 60 to 70 °C and at a pressure of 100-200 bar) and a second time (e.g. between 60 to 70 °C and at a pressure of 10-50 bar).

The homogenised cream-mix is cooled down to 0-5 °C in a heat exchanger and remains in said temperature range during about 4-12 h. This method step is called "ripening".

The ripened cream-mix is brought into a first cooling cylinder or "freezer", respectively, - and simultaneously - the pasteurised sorbet-mix is brought into a second freezer. The cream-mix and the sorbet-mix are cooled down (frozen) to -4 to -8 °C, wherein at the same time air is whipped into the cream-mix and the sorbet-mix. The cream-mix can be frozen for example by a GRAM FREEZER FCF-18-SS and the sorbet-mix by a GRAM FREEZER FCF-18-22.

Subsequently, the frozen cream-mix and the frozen sorbet-mix flow separately from each other into the same mixer. Preferably, the frozen cream-mix and the frozen sorbet-mix are combined before entering the mixer, for example by a T-shaped piece with a first and a second arm which converge into a single flow path that enters said mixer, wherein said first arms directs e.g. the frozen cream-mix and the second arm directs e.g. the frozen sorbet-mix from the freezer to the single flow path in which the cream-mix and the sorbet-mix merge and partly are premixed before entering the mixer.

During the mixing, performed by means of a HOYER FF-4000, lumpy goods such as fruit pieces, nuts and so forth are incorporated into the ice-cream mixture.

After the performance of the mixing step, the ice-cream mixture is formed, optionally coated, packaged and deep-frozen as known in the state of the art.

### Example 2

At the beginning, a cream-mix and a fat-free sorbet-mix are prepared. The cream-mix and the sorbet-mix are separately pasteurised, wherein the cream-mix is subsequently homogenised. The homogenised cream-mix is cooled down and ripened. These steps are performed as e.g. described in example 1.

Afterwards, the ripened cream-mix and the pasteurised sorbet-mix are brought by means of a T-shaped piece - as described in example 1 - into the same freezer (e.g. a GRAM FREEZER FCF-18-SS or a GRAM FREEZER FCF-18-22), wherein the ripened cream-mix and the pasteurised acid component are added to the single flow path sequentially at intervals of 5 seconds.

After the freezing process, a mixing step is performed in a fruit feeder such as a HOYER FF-4000 during which chunky pieces as for example fruit pieces or nuts are incorporated into the ice-cream mixture.

After this mixing, the ice-cream mixture is formed, optionally coated, packaged and deep-frozen according to the general knowledge in the art.

## Claims

1. A method for preparing a frozen ice-cream product with a pH ≤ 6.0 and comprising at least one protein, wherein
• at least one cream-mix with a pH > 6.0 and comprising said at least one protein is combined with
• at least one acid component comprising at least one acid to form an ice-cream mixture such that
• at a temperature between -2 to 10°C the contact time of said at least one protein and said at least one acid
- prior to freezing said ice-cream mixture with simultaneous mixing or
- prior to freezing said at least one cream-mix
• is at most such that said at least one protein does not react with said at least one acid, and/or does not coagulate to a particle size of > 100 µm.

2. The method according to claim 1, wherein said frozen ice-cream product has a pH ≤ 5, preferably a pH of 5 to 2.5, more preferably a pH of 5 to 3.5.

3. The method according to claim 1 or 2, comprising the steps of:
a) Preparing said at least one cream-mix and preparing said at least one acid component;
b) Freezing said at least one cream-mix to a frozen cream-mix;
c) Combining said at least one frozen cream-mix with said at least one acid component to form said ice-cream mixture.

4. The method according to claim 3, wherein said at least one acid component is frozen before said combining with said at least one frozen cream-mix.

5. The method according to claim 1, comprising the steps of:
a) Preparing said at least one cream-mix and preparing said at least one acid component;
b) Combining said at least one cream-mix and said at least one acid component to form said ice-cream mixture;
c) Freezing said ice-cream mixture with simultaneous mixing.

6. The method according to claim 5, wherein said contact time is
< 5s, preferably < 3s, more preferably 0s.

7. The method according to anyone of the preceding claims,
wherein chunky pieces are added after said freezing, preferably in a fruit feeder.

8. The method according to anyone of the preceding claims,
wherein said combining of said at least one cream-mix with said at least one acid component is performed in a ratio of 95:5 - 10:90, preferably a ratio of 70:30 - 30:70, more preferably a ratio of 50:50.

9. The method according to anyone of the preceding claims,
wherein said at least one acid component is a sorbet-mix.

10. A frozen ice-cream product comprising at least one protein and at least one acid component, **characterized in that**
• said frozen ice-cream product has a pH ≤ 5.0 and
• said at least one protein
- has not reacted with said at least one acid component and/or
- has not coagulated to a particle size of > 100 µm.

11. The frozen ice-cream product according to claim 10, having a pH of 5 to 2.5, preferably a pH of 5 to 3.5.

12. The frozen ice-cream product according to claim 10 or 11, wherein the protein has at most partially coagulated.

13. The frozen ice-cream product according to anyone of claims 10 to 12, wherein said frozen ice-cream product is prepared according to anyone of the claims 1-9.

## Patentansprüche

1. Verfahren zur Herstellung eines gefrorenen Eiscremeprodukts mit einem pH-Wert ≤ 6,0 und umfassend mindestens ein Protein, bei dem
• mindestens eine Crememischung mit einem pH-Wert > 6,0 und umfassend das mindestens eine Protein kombiniert wird mit
• mindestens einer Säurekomponente, die mindestens eine Säure umfasst, um eine Eiscrememischung zu bilden, so dass
• bei einer Temperatur zwischen -2°C und 10°C die Kontaktzeit des mindestens einen Proteins und der mindestens einen Säure
- vor dem Gefrieren der Eiscrememischung unter simultanem Mischen oder
- vor dem Gefrieren der mindestens einen Eiscrememischung
• höchstens so ist, dass das mindestens eine Protein nicht mit der mindestens einen Säure reagiert und/oder nicht zu einer Partikelgröße von > 100µm koaguliert.

2. Verfahren nach Anspruch 1, wobei das gefrorene Eiscremeprodukt einen pH-Wert ≤ 5 hat, vorzugsweise einen pH-Wert von 5 bis 2,5, bevorzugter einen pH-Wert von 5 bis 3,5.

3. Verfahren nach Anspruch 1 oder 2, das die folgenden Schritte umfasst:
a) Herstellen der mindestens einen Crememischung und Herstellung der mindestens einen Säurekomponente;
b) Gefrieren der mindestens einen Crememischung zu einer gefrorenen Crememischung;
c) Kombinieren der mindestens einen gefrorenen Crememischung mit der mindestens einen Säurekomponente zur Bildung der Eiscrememischung.

4. Verfahren nach Anspruch 3, wobei die mindestens eine Säurekomponente vor dem Kombinieren mit der mindestens einen gefrorenen Crememischung gefroren wird.

5. Verfahren nach Anspruch 1, das die folgenden Schritte umfasst:
a) Herstellen der mindestens einen Crememischung und Herstellen der mindestens einen Säurekomponente;
b) Kombinieren der mindestens einen Crememischung mit der mindestens einen Säurekomponente zur Bildung der Eiscrememischung.
c) Gefrieren der Eiscrememischung unter simultanem Mischen.

6. Verfahren nach Anspruch 5, wobei die Kontaktzeit < 5s, vorzugsweise < 3s, bevorzugter 0s ist.

7. Verfahren nach einem der vorhergehenden Ansprüche, wobei nach dem Gefrieren grobe Stücke hinzugefügt werden, vorzugsweise in einem Frucht-Zuführapparat.

8. Verfahren nach einem der vorhergehenden Ansprüche, wobei das Kombinieren der mindestens einen Crememischung mit der mindestens einen Säurekomponente in einem Verhältnis von 95:5 - 10:90, vorzugsweise einem Verhältnis von 70:30 - 30:70, bevorzugter einem Verhältnis von 50:50 durchgeführt wird.

9. Verfahren nach einem der vorhergehenden Ansprüche, wobei die mindestens eine Säurekomponente eine Sorbetmischung ist.

10. Gefrorenes Eiscremeprodukt, umfassend mindestens ein Protein und mindestens eine Säurekomponente, **dadurch gekennzeichnet, dass**
• das gefrorene Eiscremeprodukt einen pH-Wert ≤ 5,0 hat und
• das mindestens eine Protein
- nicht mit der mindestens einen Säurekomponente reagiert hat und/oder
- nicht zu einer Partikelgröße von > 100µm koaguliert ist.

11. Gefrorenes Eiscremeprodukt nach Anspruch 10, mit einem pH-Wert von 5 bis 2,5, bevorzugt einem pH-Wert von 5 bis 3,5.

12. Gefrorenes Eiscremeprodukt nach Anspruch 10 oder 11, wobei das Protein höchstens teilweise koaguliert ist.

13. Gefrorenes Eiscremeprodukt nach einem der Ansprüche 10 bis 12, wobei das gefrorene Eiscremeprodukt nach einem der Ansprüche 1-9 hergestellt wird.

## Revendications

1. Procédé pour la préparation d'un produit de crème glacée congelé présentant un pH ≤ 6,0 et comprenant au moins une protéine, dans lequel
- au moins un mélange de crème présentant un pH > 6,0 et comprenant ladite au moins une protéine est combiné avec
- au moins un composant acide comprenant au moins un acide pour former un mélange de crème glacée de sorte que
- à une température entre -2 et 10°C le temps de contact de ladite au moins une protéine et dudit au moins un acide
- avant la congélation dudit mélange de crème glacée avec mélange simultané ou
- avant la congélation dudit au moins un mélange de crème
- est au plus tel que ladite au moins une protéine ne réagit pas avec ledit au moins un acide, et/ou ne coagule pas en une taille de particule > 100 µm.

2. Le procédé selon la revendication 1, dans lequel ledit produit de crème glacée congelé présente un pH ≤ 5, de préférence un pH de 5 à 2,5, plus préférablement un pH de 5 à 3,5.

3. Le procédé selon les revendications 1 ou 2, comprenant les étapes consistant à :
a) préparer ledit au moins un mélange de crème et préparer ledit au moins un composant acide ;
b) congeler ledit au moins un mélange de crème en un mélange de crème congelé ;
c) combiner ledit au moins un mélange de crème congelé avec ledit au moins un composant acide pour former ledit mélange de crème glacée.

4. Le procédé selon la revendication 3, dans lequel ledit au moins un composant acide est congelé avant ladite combinaison avec ledit au moins un mélange de crème congelé.

5. Le procédé selon la revendication 1, comprenant les étapes consistant à :
a) préparer ledit au moins un mélange de crème et préparer ledit au moins un composant acide ;
b) combiner ledit au moins un mélange de crème et ledit au moins un composant acide pour former ledit mélange de crème glacée ;
c) congeler ledit mélange de crème glacée avec mélange simultané.

6. Le procédé selon la revendication 5, dans lequel ledit temps de contact est < 5s, de préférence < 3s, plus préférablement 0s.

7. Le procédé selon l'une quelconque des revendications précédentes, dans lequel des morceaux grossiers sont ajoutés après ladite congélation, de préférence dans un dispositif d'alimentation de fruit.

8. Le procédé selon l'une quelconque des revendications précédentes, dans lequel ladite combinaison dudit au moins un mélange de crème avec ledit au moins un composant acide est effectuée selon un rapport de 95:5 - 10:90, de préférence un rapport de 70:30 - 30:70, plus préférablement un rapport de 50:50.

9. Le procédé selon l'une quelconque des revendications précédentes, dans lequel ledit au moins un composant acide est un mélange de sorbet.

10. Produit de crème glacée congelé comprenant au moins une protéine et au moins un composant acide, **caractérisé en ce que**
- ledit produit de crème glacée congelé présente un pH ≤ 5,0 et
- ladite au moins une protéine
- n'a pas réagi avec ledit au moins un composant acide et/ou
- n'a pas coagulé en une taille de particule > 100 µm.

11. Le produit de crème glacée congelé selon la revendication 10, présentant un pH de 5 à 2,5, de préférence un pH de 5 à 3,5.

12. Le produit de crème glacée congelé selon la revendication 10 ou 11, dans lequel la protéine a au plus coagulé partiellement.

13. Le produit de crème glacée congelé selon l'une quelconque des revendications 10 à 12, dans lequel ledit produit de crème glacée congelé est préparé selon l'une des revendications 1-9.
